# FASCICULE DE BREVET EUROPEEN

(11) **EP 0 626 793 B1**
(45) Date de publication et mention de la délivrance du brevet: **28.11.2001**
(21) Numéro de dépôt: 94112343.2
(22) Date de dépôt: 14.04.1987
(51) Int. Cl.: H04N 7/167

(54) **Système de télévision à péage**
Bezahlfernsehsystem
Pay television system

(30) Priorité: 18.04.1986 CH 157686
(43) Date de publication de la demande: 30.11.1994
(62) Demande divisionnaire de: 87810236.7
(73) Titulaire: NAGRA PLUS S.A., CH-1033 Cheseaux-sur-Lausanne (CH)
(72) Inventeur: Kudelski, André, CH-1095 Lutry (CH); Laffely, Laurent, CH-1052 Le Mont-sur-Lausanne (CH); Sasselli, Marco, CH-1803 Chardonne (CH)
(74) Mandataire: Wenger, Joel-Théophile

(56) Documents cités:
- EP-A- 0 014 654
- EP-A- 0 126 495
- INT. CONF. ON SECURE COMMUNICATION SYSTEMS, 23 Février 1984, LONDON, GB pages 71 - 78 S.M. EDWARDSON 'Scrambling and encryption for direct broadcasting by satellite'

## Description

La présente invention concerne un système de télévision à péage, comprenant, au niveau de la réception, un décodeur et une carte séparée pouvant être connectée audit décodeur, le décodeur recevant à la fois un signal vidéo brouillé et un code de débrouillage chiffré.

Dans un système de télévision à péage (pay-TV), et de manière générale, l'abonné choisit les programmes qu'il désire regarder et il paie pour recevoir ces programmes qui sont transmis sous forme brouillée afin d'être inintelligibles aux non abonnés ou aux abonnés qui n'ont pas choisi ni payé pour un programme particulier. Les signaux peuvent être transmis par câble, antenne ou satellite. Les systèmes de télévision à péage évolués comportent en outre la possibilité dite "pay-per-view" d'achat de programmes soit juste avant le début de l'émission, soit en cours d'émission, et ceci dans un système de transmission à voie unique. Dans ce cas, il est nécessaire de mémoriser un certain crédit à l'endroit de l'utilisateur, crédit qui est à disposition pour permettre l'achat et la réception d'une émission pay-per-view que l'on désire regarder. Si le crédit mémorisé est suffisant, le montant de l'émission est débité du crédit et le signal reçu de la station émettrice est débrouillé pour en permettre une réception confortable.

Le document W0 81/02499 concerne un procédé et un système pour le brouillage de la transmission d'information vidéo, particulièrement pour la télévision à péage. Des parties du signal vidéo, par exemple des parties ou segments de lignes, des lignes ou des trames sont transmises dans un ordre différent de leur séquence naturelle. La manière de réarranger la séquence des segments de lignes pour la transmission peut être contrôlée par un générateur de code qui change la séquence à chaque trame ou en fonction d'une autre base de temps adéquate. Le code, qui peut être chiffré, varie de manière aléatoire et il peut être entièrement ou partiellement transmis avec le signal vidéo brouillé.

Le brevet US 4 484 217 concerne un procédé et un système pour facturation à distance d'un programme de télévision à péage. Le crédit à disposition est mémorisé à l'endroit du souscripteur et un signal de coût est transmis par l'émetteur. Pay-per-view est rendu possible par le fait qu'il est prévu un achat impulsif. Un code unique peut accompagner le signal émis dans un but d'identification. Si le décodeur du souscripteur reconnaît le programme comme un programme d'achat par impulsions, le coût du programme est affiché. Pour visualiser le programme, le souscripteur entre une demande adéquate dans le décodeur et celui-ci compare automatiquement le coût du programme avec le crédit disponible. Si le coût n'excède pas le crédit, le programme est débrouillé et le coût est déduit du crédit. Cependant, le système ci-dessus n'est pas prévu pour permettre l'affichage sous forme de télétexte d'informations émises relatives aux émissions prévues, dans leur ordre chronologique, ni l'affichage d'informations sous forme d'instructions pour les opérations à effectuer par l'utilisateur sur le décodeur afin de faciliter le dialogue entre celui-ci et l'utilisateur et éviter des erreurs de manipulation.

En conséquence, le but de la présente invention est d'améliorer la gestion de crédit dans un système de télévision à péage. Dans ce but, le décodeur du système inclut :
- une mémoire agencée pour stocker un signal vidéo qui parvient au décodeur de façon brouillée et à libérer ledit signal vidéo d'une façon débrouillée; et
- un premier microprocesseur agencé pour commander ladite mémoire pour débrouiller ledit signal vidéo, ce premier microprocesseur étant en liaison avec ladite carte.

En outre, ladite carte inclut :
- un second microprocesseur avec mémoire agencé pour stocker des codes relatifs à des émissions achetées, à recevoir ledit code de débrouillage et transmettre au décodeur ledit code de débrouillage déchiffré; ce décodeur utilisant alors ledit code de débrouillage déchiffré pour débrouiller, à l'aide de ladite mémoire, ledit signal vidéo brouillé et permettre ainsi un affichage en clair de l'émission diffusée.

L'invention va être expliquée ci-après à l'aide de la description d'une forme d'exécution illustrée dans le dessin.
La figure 1 montre le principe fondamental d'un système de télévision à péage,
La figure 2 montre le principe de l'entrée et de la sortie d'une ligne du signal vidéo parmi les 32 lignes, par exemple, d'un buffer,
La figure 3 montre un schéma bloc du décodeur selon l'invention,
La figure 4 montre le principe du chiffrement et déchiffrement des codes de débrouillage transmis,
La figure 5 montre la rotation d'une ligne du signal vidéo,
La figure 6 montre l'inversion d'une ligne du signal vidéo,
La figure 7 montre une symétrie miroir d'une ligne du signal vidéo,
La figure 8 montre un schema-bloc de la carte CPTV,
La figure 9 montre la structure physique d'une ligne du signal vidéo,
La figure 10 montre la structure des données physiques dans le système de transmission de données Didon, et
La figure 11 montre la structure des données dans le système Didon.

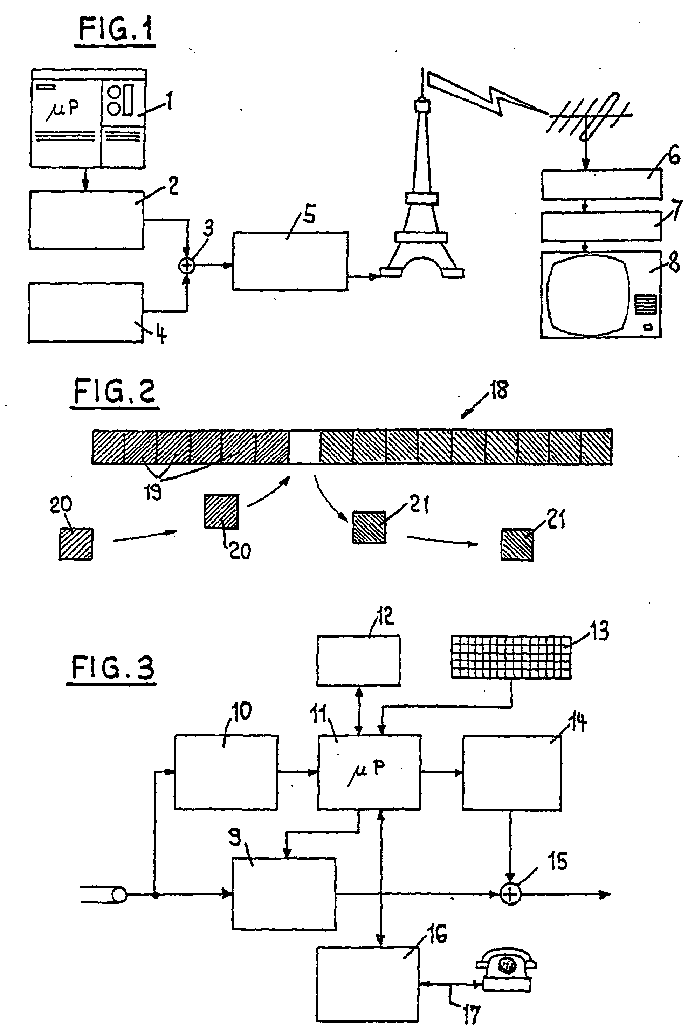

En figure 1, un micro-ordinateur 1 est prévu pour générer des données selon un format de télétexte relatives aux programmes des émissions prévues telles que titre, prix, date ou période d'émission, etc. ainsi que d'autres informations utiles à l'utilisateur. Ces données sont introduites en 3 par un interface 2 dans le signal vidéo délivré par une caméra 4 ou tout autre élément producteur de signal vidéo. Les lignes du retour du balayage vertical du signal vidéo qui ne transmettent normalement aucune information sont utilisées pour transmettre les données de télétexte, de sorte que celles-ci sont transmises en même temps que le signal vidéo.

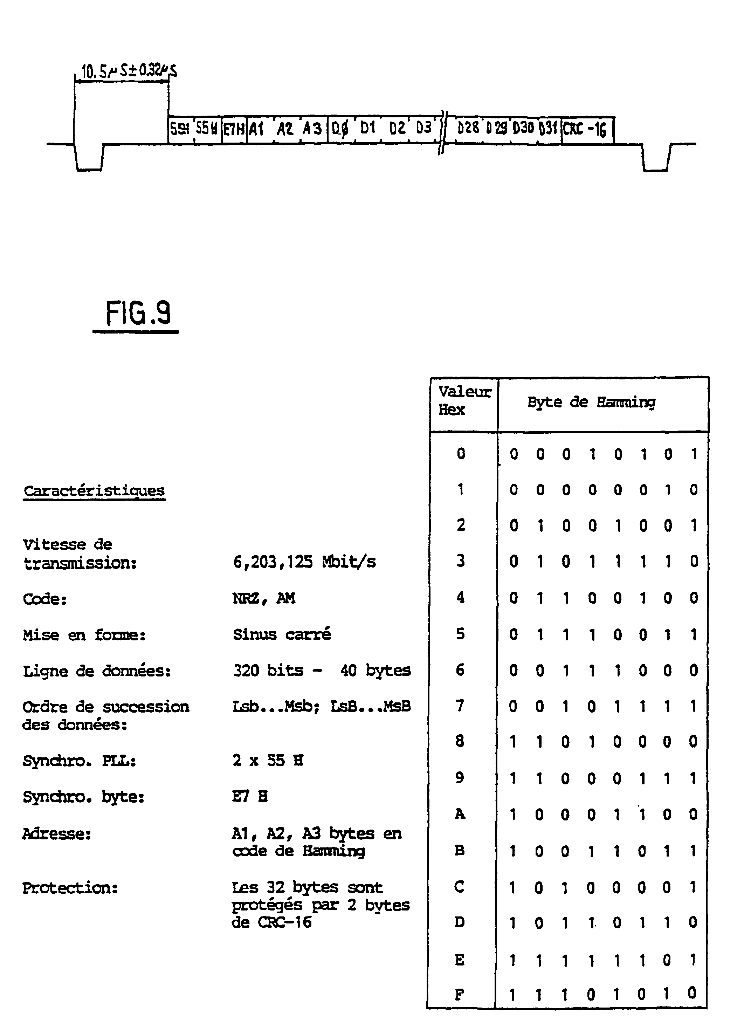

La figure 9 montre la structure d'une ligne de retour du balayage vertical du signal vidéo. On voit que la ligne est formée de 32 bytes de données de télétexte et qu'elle comprend en outre des informations de synchronisation et des adresses en code Hamming pour la détection/correction d'erreurs. Les 32 bytes de données de télétexte sont protégées par 2 bytes de code de détection d'erreurs CRC-16.

Dans cet exemple, le signal vidéo avec les données de télétexte est ensuite délivré à un brouilleur 5 qui permet de brouiller l'image, par exemple par permutation des lignes ou par d'autres moyens. Le signal brouillé est transmis par voie hertzienne, par câble vidéo ou par satellite au récepteur 6 du souscripteur. Le récepteur comporte un débrouilleur 7 qui délivre le signal débrouillé au téléviseur 8.

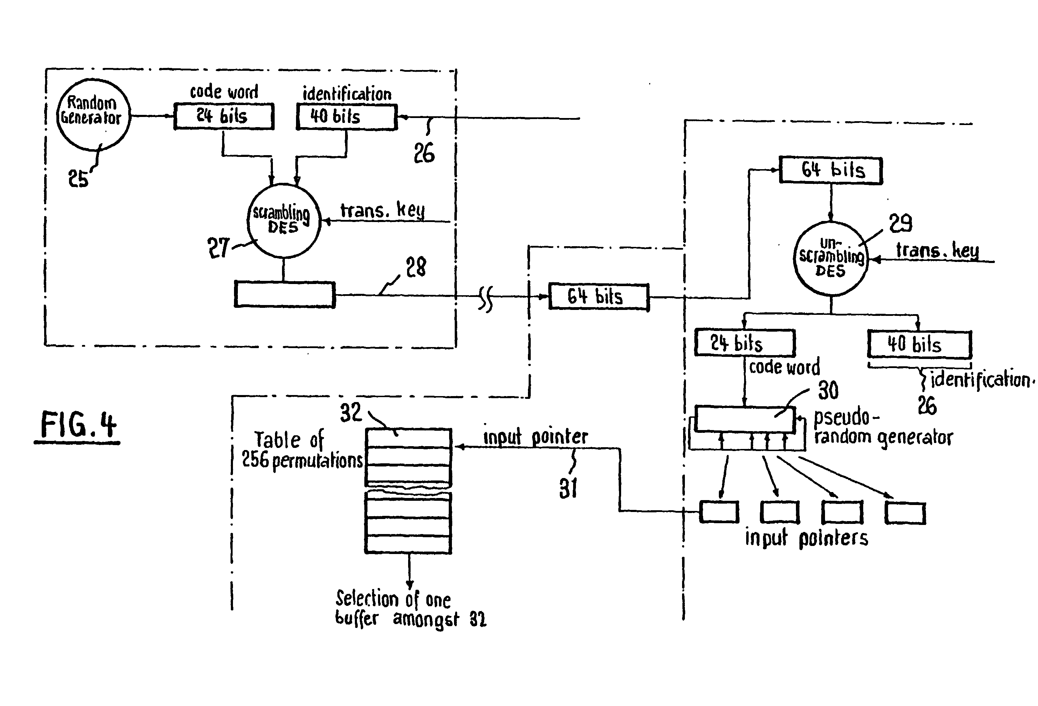

Le signal brouillé est entièrement compatible avec les normes SECAM et PAL(NTSC). Le brouillage peut être exécuté en version normale ou en version profonde. En version normale, les lignes vidéo sont permutées entre elles, seule la partie active de la ligne étant permutée. Dans le système PAL(NTSC), le burst (fréquence porteuse couleur) est laissé inchangé. Chaque ligne est échantillonnée et digitalisée sur 8 bits à une fréquence d'échantillonnage f = 3 × f_{burst} ou f = 4 × f_{burst} à la fréquence ligne, de sorte que dans le système PAL(NTSC), la phase couleur est conservée. Chaque ligne est ainsi divisée en principe en 3 (ou 4)× 256 segments de 8 bits. La figure 4 montre le principe du brouillage et débrouillage des signaux vidéo transmis. A l'émission, un générateur de hasard 25 produit des mots de code en temps réel. Une information 26 relative à l'identification de l'émission à transmettre est délivrée avec une clé de transmission 34 et le mot de code à un système de chiffrage 27, qui délivre en temps réel le signal chiffré 28 à transmettre. La clé de transmission 34 peut être transmise sous forme codée. A la réception, le signal transmis est délivré avec la clé de transmission au système de déchiffrage 29, par exemple selon le système DES qui délivre le mot de code déchiffré (pour autant que l'émission en cours ait été achetée) et l'information d'identification 26. Le mot de code commande un générateur de pseudo hasard 30 qui délivre à son tour des pointeurs 31 pour une table 32 de 256 codes de permutation. A chaque ligne du signal vidéo, la table sélectionne parmi 32 buffers celui qui permet la dé-permutation des lignes.

Il est possible d'entrer et sortir les lignes du buffer dans un ordre quelconque. La figure 2 montre schématiquement une mémoire buffer 18 comprenant les 3 × 256 segments 19 de 8 bits formant une ligne du signal vidéo. Dans cette mémoire, les segments ou échantillons sont introduits séquentiellement dans des positions successives de la mémoire. La figure montre que l'introduction d'un nouveau segment 20 dans une des positions de la mémoire libère le segment 21 qui était stocké dans cette position, de sorte que la mémoire est toujours remplie de 32 lignes et qu'un buffer est toujours rempli de 256 segments. Le brouillage/débrouillage tel qu'indiqué ci-dessus, offre une excellente sécurité contre le piratage pour les raisons suivantes :
- Le nombre de permutations de lignes possibles est si grand qu'il est difficile de trouver la "bonne combinaison", soit par hasard, soit par corrélation.
- Le code ou clé de permutation est transmis en temps réel, de sorte que même si un pirate trouve la bonne permutation, celle-ci n'est valable que pour un instant, par exemple une seconde.
- Le code de permutation est transmis chiffré, par exemple mais non exclusivement, selon le système DES, pratiquement incassable.
- Le déchiffrage des codes de permutation se fait dans une carte intelligente à microprocesseur (carte CPTV), comme on le verra plus loin, offrant toute la sécurité nécessaire. Selon l'invention, le microprocesseur de la carte constitue un des éléments du décodeur.
- Les cartes CPTV sont reprogrammables, ce qui permet de changer périodiquement les clés de codage.

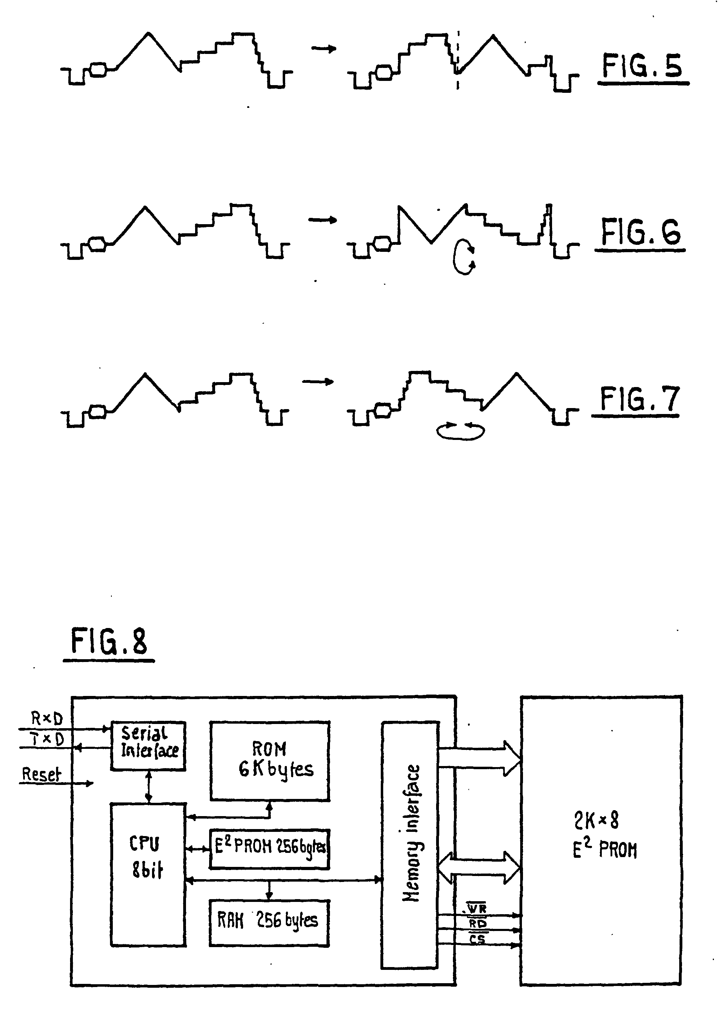

Dans la version brouillage profond, on effectue en plus de la permutation des lignes comme indiqué ci-dessus, un ou plusieurs des brouillages suivants :
- selon figure 5, une rotation de la ligne active sur elle-même, c'est-à-dire par exemple que la partie active de la ligne commence au milieu de la vraie ligne et est suivie, après la fin de la vraie ligne, du début de cette même ligne,
- selon figure 6, une inversion de la polarité de la ligne active par rapport au niveau correspondant à 50 IRE. Cette opération permet d'effectuer une adaptation automatique du niveau de luminosité pour garder celui-ci constant. Ceci permet de supprimer la possibilité de reconnaissance d'image par changement de l'éclairage ambiant.
- selon figure 7, une symétrie miroir de la ligne vidéo selon laquelle la partie active de la ligne vidéo subit une symétrie axiale d'axe perpendiculaire au niveau noir de la vidéo.

Rappelons encore que lors du brouillage, seule la partie active de la ligne est permutée, y compris ou non les lignes de retour du balayage vertical, ce qui permet le brouillage des données de télétexte, mais que dans tous les cas, la synchronisation horizontale reste inchangée. A la sortie du buffer, les données sont reconverties en signaux analogiques par un convertisseur numérique/analogique de 8 bits. On obtient ainsi un signal SECAM ou PAL(NTSC) débrouillé pour affichage sur le téléviseur. Examinons maintenant le principe du décodeur et ses possibilités d'utilisation.

La figure 3 montre que le signal vidéo en provenance de la station de tête (émettrice) est délivré à la mémoire buffer vidéo 9 de 32 lignes permettant d'effectuer la dé-permutation des lignes comme indiqué ci-dessus et à un récepteur de données de télétexte 10. Rappelons ici que les données en format de télétexte sont transmises en même temps et par le même canal que le signal vidéo, ces données étant transmises par les lignes de retour du balayage vertical du signal vidéo. Un microprocesseur 11 est l'élément central du décodeur. Il comprend des mémoires mortes et vives pour toutes les informations susceptibles d'être affichées sur le téléviseur, ces informations qui sont en forme de données en format de télétexte, étant en partie transmises par la station de tête et mémorisées dans une mémoire vive du microprocesseur et en partie mémorisées dans une mémoire morte du microprocesseur 11. Le microprocesseur est associé à une carte de sécurité dite CPTV (carte Pay TV) 12 normalement insérée dans le décodeur et à un clavier 13 de celui-ci. Le microprocesseur délivre, sur appel à l'aide du clavier, les données de télétexte sous forme numérique adéquate à un générateur de texte 14 commandant l'affichage du téléviseur. Le microprocesseur 11, en liaison avec la carte CPTV 12, commande le buffer 9 pour dépermuter les lignes comme indiqué précédemment. Le signal vidéo débrouillé ainsi que celui du générateur de texte sont à disposition en 15 pour être affichés sur le téléviseur. En outre, le microprocesseur peut aussi être relié à un modem 16 connecté lui-même à une ligne téléphonique 17.

Examinons maintenant plus en détail les possibilités du décodeur décrit ci-dessus.

La carte CPTV est une carte active comprenant un microprocesseur muni de manière interne d'une mémoire non volatile (RAM avec pile, NVRAM ou E2PROM) illisible de l'extérieur (sécurité) et une horloge. Selon figure 8, la carte comprend deux circuits électroniques A et B : le circuit A est un dispositif de sécurité avec CPU 40 et mémoires associées telles que ROM 41, E2PROM 42, RAM 43, ainsi qu'un interface de mémoire 44, et le circuit B est une mémoire séparée E2PROM de 2 Kbytes. La carte se présente en principe sous la forme d'une carte de crédit. Elle rassemble les quatre fonctions suivantes :
- Décodage de la clé de permutation transmise cryptée, par exemple selon le système DES. La carte reçoit du microprocesseur 11 la clé cryptée et retourne, lorsque l'émission a été achetée, la clé de débrouillage permettant de dépermuter les lignes du signal vidéo.
- Mémorisation de la liste des numéros, ou codes des émissions achetées et des abonnements à un genre particulier d'émissions (émissions sportives, culturelles, cinéma, cuisine, etc.). Cette mémorisation de la liste des émissions achetées permet à la carte CPTV de ne retourner au microprocesseur le code de débrouillage que si l'émission a bien été achetée. En outre, et dans un but de statistique et de facturation, il est possible de connaître les émissions achetées.
- Gestion du crédit. La carte CPTV mémorise une information représentative du crédit qu'elle peut utiliser pour l'achat d'émissions ou d'abonnements. Pour acheter une émission, l'utilisateur fait apparaître, par action sur le clavier 13, la liste des émissions prévues reçues au préalable de la station de tête et mémorisées dans le microprocesseur 11 du décodeur et qui sont sélectionnées par menu et affichées sur l'écran du téléviseur. Le téléviseur affiche, en plus du titre de l'émission, son numéro, prix, date d'émission et d'autres informations utiles si nécessaire. L'utilisateur sélectionne alors le numéro de l'émission qu'il désire en actionnant la touche correspondante sur le clavier. Si le crédit à disposition mémorisé dans la carte est suffisant pour l'achat en question, l'émission ou l'abonnement acheté est mémorisé dans la carte sur la liste des émissions achetées et le montant correspondant est déduit du crédit disponible. Lorsque l'émission achetée est diffusée, elle est identifiée par la carte par comparaison avec son numéro ou code inscrit sur la liste des émissions achetées et la carte retourne au microprocesseur le code ou clé de débrouillage.
- La quatrième fonction de la carte CPTV est une fonction de mesure du temps par une horloge. Cette fonction est utilisée lors de certaines émissions, par exemple de jeux interactifs entre l'utilisateur et la station de tête, comme décrit plus loin.

On voit que la carte se distingue des cartes connues de l'état de la technique en ce qu'elle mémorise toutes les informations confidentielles ou secrètes nécessaires au débrouillage du signal vidéo, telles que clés de débrouillage et le crédit. La carte gère le crédit, mémorise les émissions achetées et permet le débrouillage des émissions achetées. Elle est effaçable, toutes les données mémorisées pouvant être modifiées. Il est ainsi possible de modifier les clés de débrouillage et de réutiliser la carte une fois remplie.

Pour toutes les opérations à effectuer, l'utilisateur est guidé par le décodeur lui-même qui affiche des textes et instructions de manipulation sur le téléviseur par l'intermédiaire du générateur de texte 14. Dans ce but, une partie de l'information susceptible d'être affichée sous forme de texte est mémorisée en permanence dans une mémoire morte du microprocesseur 11, cette partie correspondant en principe à des instructions de manipulation, et l'autre partie des informations est mémorisée temporairement dans une mémoire vive du microprocesseur 11, cette deuxième information étant diffusée par la station de tête et concernant plus particulièrement les programmes qui seront diffusés. Les possibilités suivantes sont offertes à l'utilisateur :
- Visualisation des titres, prix, etc. des programmes qui seront diffusés,
- Guide dans l'achat des émissions programmées,
- Guide dans l'achat des abonnements (fenêtres/ canaux),
- Guide dans les fonctions annexes du décodeur,
- Dialogue avec le décodeur transparent à l'utilisateur,
- Réception de messages (particuliers/généraux),
- Réception de télétexte standard.

Ce qui précède montre que le dialogue entre l'utilisateur et le décodeur est énormément facilité par dernier. Le décodeur est en outre particulièrement bien adapté à l'achat par l'utilisateur, directement chez lui, d'une émission en dialogue avec le décodeur (pay-per-view), sans en informer le centre de gestion, c'est-à-dire que toutes les opérations d'achats sont effectuées dans la carte CPTV, le décodeur interprétant les ordres donnés par l'utilisateur et les transmettant à la carte CPTV. Dans ce but, l'utilisateur sélectionne simplement à l'aide du clavier le titre de l'émission qui l'intéresse en introduisant le numéro de celle-ci et actionne une touche "validation". Si le crédit contenu dans la carte CPTV est suffisant, le numéro ou le code de l'émission choisie est mémorisé dans la liste des émissions achetées, le montant correspondant est déduit du crédit à disposition et, lorsque l'émission est diffusée, la carte délivre au microprocesseur le code de débrouillage de l'émission. Ce principe évite une suroccupation des lignes téléphoniques et permet à un utilisateur d'acheter une émission en cours.

Si le crédit contenu dans la carte est nul ou insuffisant pour l'achat d'un abonnement ou d'une émission, un nouveau crédit ou une augmentation du crédit encore à disposition peut être introduit dans la carte selon l'une des possibilités suivantes:
- Achat par l'utilisateur auprès du centre de gestion d'un code (par exemple de 9 chiffres) correspondant au montant de crédit à recharger et recharge du crédit par introduction de ce code dans le décodeur à l'aide du clavier. Lorsque le code est introduit dans le décodeur, le nouveau crédit est mémorisé dans la carte CPTV.
- Par échange postal de la carte à intervalles de temps régulier, ce qui permet à la station de tête de savoir quels programmes ont été regardés (statistique).
- Recharge du crédit dans un point de vente (vidéo club, banque) permettant également de savoir quels programmes ont été regardés.
- Par télécommande: le crédit de la carte peut être rechargé par antenne ou par câble sur ordre de l'émission.

Parmi les utilisations possibles du décodeur selon l'invention, mentionnons encore :
- Affichage de menus pour l'achat de programmes d'abonnement avec possibilité de connaître en tout temps les programmes achetés, ces programmes étant désignés par un signe (lettre, chiffre) particulier, affichage du crédit encore à disposition, des échéances des abonnements, de l'offre globale par la station de tête, c'est-à-dire mise à jour des programmes qui seront diffusés ultérieurement, changement des conditions par groupe d'abonnés, etc. Toutes ces informations, qui sont délivrées par le récepteur de données de télétexte (10), sont mémorisées dans les mémoires du microprocesseur 11 et affichées sur demande sur l'écran du téléviseur par le générateur de texte 14.
- Jeux interactifs: Il s'agit par exemple d'un jeu de loto avec la station de tête auquel l'utilisateur participe en misant un numéro et en introduisant le montant joué correspondant à l'aide du clavier 13. Le numéro et le montant joués sont mémorisés dans la carte CPTV. Le numéro tiré ou sorti à l'émission est transmis par le signal vidéo et sous forme codée comme données de télétexte et, si il correspond au numéro misé par l'utilisateur, celui-ci est authentifié par la carte CPTV à l'aide de l'horloge interne qu'elle contient qui détermine exactement le temps écoulé entre la mise et le contrôle du gain, pour éviter toute fraude, étant bien entendu que la mise doit précéder le tirage à l'émission. Si le joueur est gagnant, le décodeur appelle la centrale d'émission par l'intermédiaire du modem 16 et le gain est bonifié sous forme d'une augmentation du crédit dans la carte CPTV, cette augmentation étant commandée par la station de tête (voir ci-dessous).
- Réception de messages personnalisés émis par la station de tête. Ces messages sont envoyés dans un format télétexte et le décodeur vérifie qu'il est bien celui qui est habilité à recevoir le message. Dans ce but, chaque carte CPTV est porteuse d'un numéro particulier d'identification mémorisé qui est transmis station de tête avec chaque message. Si le décodeur est bien celui auquel le message est adressé, la carte permet l'affichage du message sur le téléviseur.
- Code de sécurité. Il s'agit d'un code destiné à éviter que des personnes non autorisées, par exemple des enfants, effectuent des achats dont le montant dépasse un montant prédéterminé ou participent à des jeux qui ne leur sont pas destinés. Dans ce cas, il faut introduire par le clavier un code de sécurité dans le décodeur, comme mot de passe. Si celui-ci n'est pas introduit ou si il n'est pas correct, le décodeur refuse d'exécuter l'ordre qui lui est donné.
- Liaison par modem. Grâce au modem 16 relié au microprocesseur 11 et à une ligne téléphonique 17, il est possible au décodeur dans lequel est insérée la carte CPTV, d'appeler automatiquement pendant la nuit (grâce à l'horloge de la carte CPTV) la station de tête pour se faire recharger un crédit, si celui-ci est épuisé. Par la même occasion, le décodeur envoie à la station de tête l'ensemble des émissions regardées. Bien entendu, l'appel de la station de tête par le décodeur peut aussi se faire périodiquement, à dates fixes, si désiré.
- Le décodeur peut être utilisé comme récepteur du télétexte standard avec toutes les fonctions habituelles des exploitants de chaînes de télévision ou auprès des PTT.

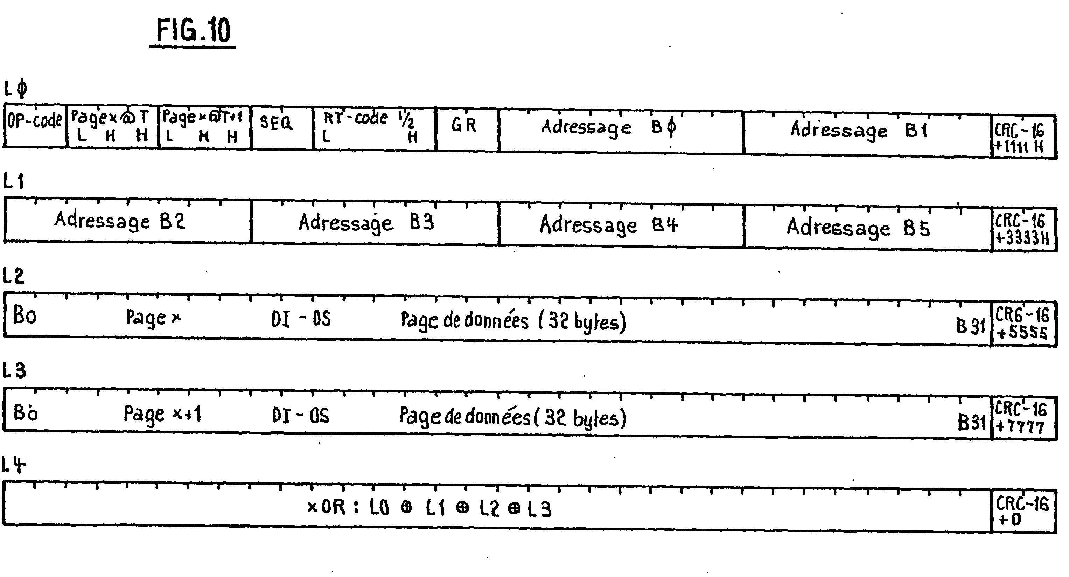

La figure 10 montre comme exemple de l'organisation des données dans les lignes du signal vidéo la structure des données physiques dans le cas d'une transmission de données par le système Didon (France). A chaque trame du signal vidéo est transmise une ligne telle que L0, L1, L2, L3 ou L4. Ainsi, un groupe de 5 lignes (L0 à L4) est transmis toutes les 5 trames. On voit plus particulièrement que les lignes L2 et L3 transmettent des pages de données de 32 bytes chacune. Les adressages B0 à BS permettent de sélectionner un groupe de souscripteurs parmi 2²⁴ groupes, chacun de 240 souscripteurs. Les adressages comprennent le numéro du groupe, l'action à exécuter, par exemple recharge de crédit, et la liste des souscripteurs concernés par cette action particulière. La synchronisation est assurée par un reste de CRC-16 comme indiqué. En outre, chaque ligne est protégée par un CRC-16 qui permet une détection d'erreur et chaque groupe de 5 lignes est protégé par un OU-EXCLUSIF qui permet de corriger une ligne erronée. L'avantage d'une organisation des données selon figure 10 est qu'elle permet de retrouver très facilement l'information là où elle se trouve dans le décodeur.

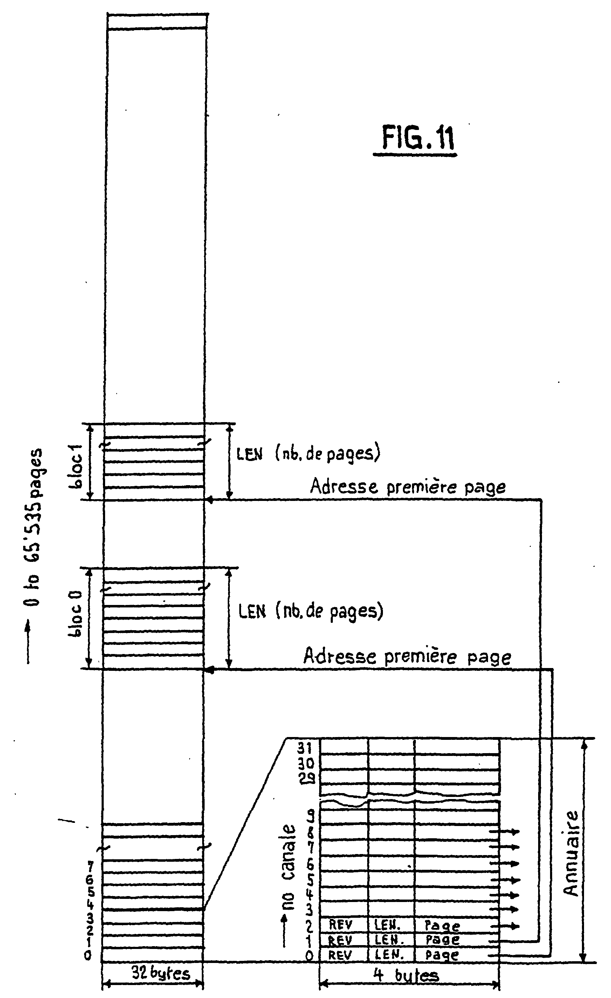

La figure 11 montre un autre exemple de structure des données dans le cas du système DI-OS (Didon operating system). On voit que les données sont organisées en 65'536 pages de 32 bytes chacune. Les quatre premières pages (0 à 3) de la structure de données comprennent une table qui délivre pour chaque canal susceptible d'être transmis l'adresse de la première page d'un bloc de pages correspondant à ce canal ainsi que la longueur du bloc qui est identique avec le nombre de pages de ce bloc et le numéro des révisions ou modifications qui ont été apportées à ce bloc. L'avantage de l'organisation selon figure 11 est qu'elle conduit à une structure très souple pour la transmission des données ainsi qu'une extension future très souple.

Ce qui précède montre que le décodeur selon l'invention offre un très grand nombre de possibilités à l'utilisateur, et plus particulièrement qu'il facilite le dialogue avec ce dernier grâce à l'affichage sur le téléviseur des programmes des émissions prévues et des instructions de manipulation nécessaires à effectuer sur le clavier pour leur achat ou pour une recharge du crédit. En outre, la carte CPTV rend le décodeur extrêmement sûr contre le piratage.

## Revendications

1. Système de télévision à péage, destiné à gérer un signal de télévision brouillé lorsqu'une émission a été achetée, comprenant, au niveau de la réception, un décodeur et une carte séparée (12) pouvant être connectée audit décodeur, le décodeur recevant à la fois un signal vidéo brouillé, le brouillage étant effectué en fonction d'un code de brouillage, et un signal d'identification chriffré comprenant au moins un code d'identification correspondant à l'identification d'une émission et dudit code de brouillage, ledit décodeur incluant:
- une mémoire (9) agencée pour stocker le signal vidéo qui parvient au décodeur de façon brouillée et pour débrouiller ledit signal vidéo; et
- un premier microprocesseur (11) en communication avec ladite carte (12) auquel il communique ledit signal d'identification agencé pour débrouiller ledit signal vidéo, ce premier microprocesseur (11) utilisant comme paramètre de débrouillage, le code de brouillage déchiffré fourni par la carte (12);
et ladite carte (12) incluant:
- un second microprocesseur (40) avec mémoire (41, 42, 43) agencé pour stocker des codes relatifs à des émissions achetées, à recevoir ledit signal d'identification et transmettre au décodeur ledit code de brouillage déchiffré; ce décodeur utilisant alors ledit code de brouillage déchiffré pour débrouiller, à l'aide de ladite mémoire (9), ledit signal vidéo brouillé et permettre ainsi un affichage en clair de l'émission diffusée.

2. Système de télévision à péage selon la revendication 1, **caractérisé en ce que**, à l'émission, une information (26) relative à l'identification de l'émission à transmettre et un signal d'identification (34) sont produits et envoyés à un système de chiffrage (27) qui délivre en temps réel le signal chiffré (28) à transmettre, et à la réception, le signal transmis est délivré avec le signal d'identification à un système de déchiffrage (29) qui délivre le mot de code de brouillage déchiffré et l'information d'identification (26), le mot de code commandant un générateur pseudoaléatoire (30) qui délivre à son tour des codes de débrouillage pour débrouiller dans le décodeur le signal vidéo reçu brouillé.

3. Système de télévision à péage selon la revendication 2, **caractérisé en ce que** ledit mot de code de brouillage déchiffré commande le générateur pseudo-aléatoire (30) qui délivre à son tour des pointeurs (31) pour effectuer des pointages sur une table (32) constituée par une pluralité de codes de brouillage, de façon que les codes de brouillage pointés soient utilisés pour commander ladite mémoire (9) afin qu'elle libère ledit signal vidéo d'une façon débrouillée.

4. Système de télévision à péage selon la revendication 1, 2 ou 3, où la mémoire (9) du décodeur est agencée pour recevoir un signal vidéo brouillé par permutation des lignes, dans lequel chaque ligne est échantillonnée et numérisée en un certain nombre d'échantillons, et des moyens pour débrouiller le signal vidéo mémorisé selon un code de débrouillage variable,
**caractérisé en ce que** ladite mémoire (9) est constituée par un buffer de lignes (18), par exemple 32 lignes divisées en cellules juxtaposées (19) dans lesquelles lesdits échantillons (20) sont introduits séquentiellement, chaque ligne (18) du buffer étant constituée d'autant de cellules (19) qui sont nécessaires pour stocker le nombre d'échantillons (20, 21) d'une ligne du signal vidéo,
l'entrée de chaque échantillon (20) dans une cellule du buffer provoquant la sortie de cette cellule de l'échantillon (21) mémorisé dans cette même cellule, de sorte que ladite mémoire (9) est toujours remplie du nombre de lignes et que chaque ligne du buffer (18) est toujours remplie du nombre d'échantillons (21 ou 20) qu'elle peut contenir,
l'ordre d'extraction des lignes du buffer mémorisées 35 (18) pour effectuer le débrouillage étant déterminé par la sélection, sous commande dudit code de brouillage, parmi les lignes du buffer, de celles qui permettent la dé-permutation des lignes.

5. Système de télévision à péage selon la revendication 4, **caractérisé en ce que** chaque ligne du signal vidéo numérisée comprend 3 ou 4 fois 256 échantillons de 8 bits chacun, ces échantillons venant se stocker dans un nombre égal de cellules (19) d'une ligne (18) du buffer.

6. Système de télévision à péage selon l'une quelconque des revendications 4 ou 5, **caractérisé en ce que** le buffer comporte 32 lignes.

7. Système de télévision à péage selon l'une quelconque des revendications 4 à 6, pour le décodage d'un signal vidéo dans lequel des données sont stockées dans les lignes de retour du balayage vertical et seule la partie active de la ligne est permutée, y compris les lignes de retour du balayage vertical, la synchronisation horizontale n'étant pas permutée, de telle sorte que lesdites données sont brouillées en même temps que l'image.

8. Système de télévision à péage selon l'une quelconque des revendications 4 à 7, pour le décodage d'un signal vidéo dans lequel, en plus de la permutation des lignes, chaque ligne ainsi permutée subit en outre une rotation de la partie active de la ligne sur elle-même.

9. Système de télévision à péage selon l'une quelconque des revendications 4 à 8, **caractérisé en ce que** les moyens pour débrouiller le signal vidéo mémorisé comprennent : un système de déchiffrage (29) d'une carte CPTV délivrant un mot de code déchiffré, et un générateur de pseudo-hasard (30) qui délivre des pointeurs (31) à une table (32) contenant un nombre de codes de permutation, laquelle table sélectionne parmi les lignes (18) du buffer, celles qui permettent la dé-permutation.

10. Système de télévision à péage selon la revendication 1, **caractérisé en ce que** la carte (12) comprend une mémoire de crédit et transmet le code de brouillage au décodeur pour autant que le crédit restant sur ladite carte (12) est supérieur au coût de l'émission sélectionnée par l'utilisateur.

11. Système de télévision à péage selon l'une des revendications précédentes, **caractérisé en ce que** le décodeur comprend des moyens de stockage et d'affichage d'informations sur les émissions futures et comprend des moyens pour sélectionner par l'utilisateur les émissions qu'il souhaite acheter.

12. Système de télévision à péage selon l'une des revendications précédentes, **caractérisé en ce que** la carte (12) comprend une mémoire pour stocker des informations sur des émissions achetées et des moyens pour transmettre ces informations au décodeur.

13. Système de télévision à péage selon l'une des revendications précédentes, **caractérisé en ce que** la carte (12) comprend une horloge dont la valeur détermine la transmission de la clé de brouillage au décodeur.

## Claims

1. Pay-TV system, intended to manage a scrambled television signal when an emission has been purchased, comprising on the receiver side a decoder and a separate card (12) that can be connected to said decoder, where the decoder receives at once a scrambled video signal where the scrambling has been brought about as a function of a scrambling code, and a ciphered identification signal comprising at least an identification code that corresponds to the identification of an emission and of said scrambling code, where said decoder includes:
- a memory (9) arranged to store the video signal that arrives in scrambled form at the decoder, and to descramble said video signal; and
- a first microprocessor (11) in communication with said card (12) to which it communicates said identification signal, arranged to descramble said video signal, where this first microprocessor (11) uses the deciphered scrambling code furnished by card (12) as the descrambling parameter;
and said card (12) includes:
- a second microprocessor (40) with memory (41, 42, 43) arranged to store the codes referring to emissions purchased, to receive said identification signal and to transmit to the decoder said deciphered scrambling code; where this decoder then uses said deciphered scrambling code to descramble with the aid of said memory (9) said scrambled video signal and to thus permit a clear display of the broadcast emission.

2. Pay-TV system according to claim 1, **characterized in that** during emission an information (26) relating to the identification of the emission to be transmitted and an identification signal (34) are produced and sent to a system of ciphering (27) which furnishes in real time the ciphered signal (28) that is to be transmitted, and during reception the transmitted signal is delivered together with the identification signal to an deciphering system (29) which delivers the deciphered scrambling code word and the identification information (26), while the code word controls a pseudo-random generator (30) which in its turn delivers descrambling codes to descramble in the decoder the video signal that is received in scrambled form.

3. Pay-TV system according to claim 2, **characterized in that** said deciphered scrambling code word controls the pseudo-random generator (30) which in its turn delivers pointers (31) to carry out markings in a table (32) consisting of a plurality of scrambling codes, such that the marked scrambling codes be used to control said memory (9) so that it sets free said video signal in an descrambled manner.

4. Pay-TV system according to claims 1, 2 or 3 where the memory (9) of the decoder is arranged to receive a video signal scrambled by permutation of lines in which each line is sampled and digitized to a certain number of samples, and means to descramble the stored video signal according to a variable descrambling code,
**characterized in that** said memory (9) consists of a buffer of lines (18), for instance 32 lines, divided in juxtaposed cells (19) into which said samples (20) are sequentially introduced, while each line (18) of the buffer consists of that number of cells (19) that is necessary to store the number of samples (20, 21) of one video signal line,
where entry of each sample (20) into a buffer cell causes the exit from that cell of the sample (21) stored **in that** same cell, such that said memory (9) is always filled with the number of lines, and each line of the buffer (18) is always filled with the number of samples (21, 20) that it can hold,
where the order of extraction of stored buffer lines (18) for descrambling is determined by selecting under the control of said scrambling code among the buffer lines those that will permit the de-permutation of the lines.

5. Pay-TV system according to claim 4, **characterized in that** each line of the digitized video signal comprises three or four times 256 samples of eight bits each, these samples being stored in an equal number of cells (19) of one line (18) of the buffer.

6. Pay-TV system according to any of claims 4 or 5, **characterized in that** the buffer comprises 32 lines.

7. Pay-TV system according to any of claims 4 to 6 for the decoding of a video signal in which the data are stored in the vertical fly back lines and only the active part of the line is permuted, including the vertical fly back lines, while the horizontal synchronization is not permuted, so that said data are scrambled at the same time as the image.

8. Pay-TV system according to any of claims 4 to 7 for the decoding of a video signal in which in addition to permutation of the lines each line thus permuted also is subject to a rotation of the line's active part around itself.

9. Pay-TV system according to any of claims 4 to 8, **characterized in that** the means for descrambling the stored video signal comprise: a deciphering system (29) of a CPTV card delivering a deciphered code word and a pseudo-random generator (30) delivering pointers (31) to a table (32) containing a number of permutation codes, which table selects among the lines (18) of the buffer those that will permit de-permutation.

10. Pay-TV system according to claim 1, **characterized in that** the card (12) comprises a credit memory and transmits the scrambling code to the decoder provided the credit remaining on said card (12) is higher than the price of the emission selected by the user.

11. Pay-TV system according to one of the preceding claims, **characterized in that** the decoder comprises means to store and display information on future emissions and comprises means for the user to select the emissions he wishes to purchase.

12. Pay-TV system according to one of the preceding claims, **characterized in that** the card (12) comprises a memory for storing information concerning the emissions purchased, and means to transmit this information to the decoder.

13. Pay-TV system according to one of the preceding claims, **characterized in that** the card (12) comprises a clock the value of which determines transmission of the scrambling key to the decoder.

## Patentansprüche

1. Abonnentenfernsehsystem, dazu bestimmt, ein venmrürfeltes Fernsehsignal zu verwalten, wenn eine Sendung gekauft worden ist, empfangsseitig einen Decodierer und eine getrennte Karte (12) umfassend, die an den benannten Decodierer angeschlossen werden kann, wobei der Decodierer gleichzeitig ein verwürfeltes Fernsehsignal, bei dem die Verwürfelung in Abhängigkeit von einem Verwürfelungscode erfolgt ist, und ein chiffriertes ldentifizierungssignal empfängt, das zumindest einen der Identifizierung einer Sendung entsprechenden Identifizierungscode und den benannten Verwürfelungscode umfasst, und wobei der benannte Decodierer enthält:
- einen Speicher (9), dafür eingerichtet, das Videosignal zu speichern, das verwürfelt zum Decodierer gelangt, und das benannte Videosignal rückzuverwürfeln; und
- einen ersten Mikroprozessor (11) in Verbindung mit der benannten Karte (12), welcher er das benannte Identifizierungssignal mitteilt, dafür eingerichtet, das benannte Videosignal rückzuverwürfeln, wobei dieser erste Mikroprozessor (11) den von der Karte (12) gelieferten, dechiffrierten Verwürfelungscode als Rückverwürfelungsparameter verwendet (12);
während die benannte Karte (12) enthält:
- einen zweiten Mikroprozessor (40) mit Speicher (41, 42, 43), dafür eingerichtet, gekaufte Sendungen betreffende Codes zu speichern, das benannte Identifizierungssignal zu empfangen und den benannten dechiffrierten Verwürfelungscode an den Decodierer zu übermitteln; wobei dieser Decodierer dann den benannten dechiffrierten Verwürfelungscode dazu benutzt, um mit Hilfe des benannten Speichers (9) das benannte verwürfelte Videosignal rückzuverwürfeln und somit eine Klaranzeige der ausgestrahlten Sendung zu gestatten.

2. Abonnentenfernsehsystem nach Anspruch 1, **dadurch gekennzeichnet, dass** bei der Sendung eine Information (26) bezüglich der Identifizierung der zu übertragenden Sendung und ein Identifizierungssignal (34) erzeugt und an ein Chiffriersystem (27) geschickt werden, das in Echtzeit das zu übermittelnde, chiffrierte Signal (28) liefert, und beim Empfang das übertragene Signal mit dem Identifizierungssignal an ein Dechiffriersystem (29) geliefert wird, das das dechiffrierte Verwürfelungscodewort und die Identifizierungsinformation (26) liefert, wobei das Codewort einen Pseudo-Zufallsgenerator (30) steuert, der seinerseits Rückverwürfelungscodes zur Rückverwürfelung des empfangenen, verwürfelten Videosignals im Decodierer liefert.

3. Abonnentenfernsehsystem nach Anspruch 2, **dadurch gekennzeichnet, dass** das benannte, dechiffrierte Verwürfelungscodewort den Pseudo-Zufallsgenerator (30) steuert, der seinerseits Zeiger (31) liefert, um Markierungen auf einer Tabelle (32) auszuführen, die aus einer Mehrzahl von Verwürfelungscodes besteht, dergestalt, dass die markierten Verwürfelungscodes dafür verwendet werden, um den benannten Speicher (9) so zu steuern, dass er das benannte Videosignal in einer rückverwürfelten Form freisetzt.

4. Abonnentenfernsehsystem nach Anspruch 1, 2 oder 3, worin der Speicher (9) des Decodierers dafür eingerichtet ist, ein durch Zeilenpermutation verwürfeltes Videosignal zu empfangen, worin jede Zeile abgetastet und zu einer bestimmten Anzahl von Stichproben digitalisiert wird, sowie Mittel zur Rückverwürfelung des gespeicherten Videosignals nach einem variablen Rückverwürfelungscode,
**dadurch gekennzeichnet, dass** der benannte Speicher (9) aus einem Pufferspeicher von Zeilen (18), zum Beispiel 32 Zeilen, besteht, die in nebeneinanderliegende Zellen (19) aufgeteilt werden, in die die benannten Stichproben (20) sequenziell eingeführt werden, wobei jede Zeile (18) des Pufferspeichers aus so vielen Zellen (19) besteht, wie notwendig sind, um die Anzahl der Muster (20, 21) einer Videosignalzeile zu speichern,
wobei der Eintritt jeder Stichprobe (20) in eine Pufferspeicherzelle den Austritt der in derselben Zelle gespeicherten Stichprobe (21) aus dieser Zelle hervorruft, dergestalt, dass der benannte Speicher (9) immer von derjenigen Anzahl der Zeilen gefüllt ist und dass jede Zeile des Pufferspeichers (18) immer von derjenigen Anzahl der Stichproben (21 oder 20) gefüllt ist, die er enthalten kann,
wobei die Reihenfolge des Herausziehens der gespeicherten Pufferzeilen (18) zum Zweck der Rückverwürfelung durch die durch den benannten Verwürfelungscode gesteuerte Auswahl derjenigen unter den Pufferzeilen bestimmt ist, die die Rückpermutation der Zeilen gestatten.

5. Abonnentenfernsehsystsem nach Anspruch 4, **dadurch gekennzeichnet, dass** jede digitalisierte Zeile des Videosignals drei- oder viermal 256 Stichproben je acht Bit umfasst, wobei diese Stichproben in einer gleichen Anzahl von Zellen (19) einer Pufferzeile (18) gespeichert werden.

6. Abonnentenfernsehsystem nach einem beliebigen der Ansprüche 4 oder 5, **dadurch gekennzeichnet, dass** der Pufferspeicher 32 Zeilen umfasst.

7. Abonnentenfemsehsystem nach einem beliebigen der Ansprüche 4 bis 6 für die Decodierung eines Videosignals, in dem Daten in den vertikalen Rücklaufzeilen gespeichert sind und nur der aktive Teil der Zeile permutiert wird, darin eingeschlossen die vertikalen Rücklaufzeilen, während die horizontale Synchronisierung nicht permutiert wird, dergestalt, dass die benannten Daten gleichzeitig mit dem Bild verwürfelt werden.

8. Abonnentenfernsehsystem nach einem beliebigen der Ansprüche 4 bis 7 für die Decodierung eines Videosignals, in dem zusätzlich zur Permutierung der Zeilen jede so permutierte Zeile ausserdem eine Rotation des aktiven Teils der Zeile um sich selbst erleidet.

9. Abonnentenfernsehsystem nach einem beliebigen der Ansprüche 4 bis 8, **dadurch gekennzeichnet, dass** die Mittel zur Rückverwürfelung des gespeicherten Videosignals umfassen: ein Dechiffriersystem (29) einer CPTV-Karte, die ein dechiffriertes Codewort liefert, und einen Pseudo-Zufallsgenerator (30), der Zeiger (31) für eine Tabelle (32) liefert, die eine Anzahl von Permutationscodes enthält und unter den Pufferzeilen (18) diejenigen auswählt, die die Rückpermutation gestatten.

10. Abonnentenfernsehsystem nach Anspruch 1, **dadurch gekennzeichnet, dass** die Karte (12) einen Guthabenspeicher umfasst und dem Decodierer den Verwürfelungscode übermittelt, sofern das auf der benannten Karte (12) verbleibende Guthaben höher als der Preis der durch den Benutzer gewählten Sendung ist.

11. Abonnentenfernsehsystem nach einem der vorangehenden Ansprüche, **dadurch gekennzeichnet, dass** der Decodierer Mittel für die Speicherung und Anzeige von Informationen über künftige Sendungen und Mittel für die Auswahl von Sendungen durch den Benutzer, der sie zu kaufen wünscht, umfasst.

12. Abonnentenfernsehsystem nach einem der vorangehenden Ansprüche, **dadurch gekennzeichnet, dass** die Karte (12) einen Speicher umfasst, um Informationen über die gekauften Sendungen zu speichern, sowie Mittel, um diese Informationen an den Decodierer zu übermitteln.

13. Abonnentenfernsehsystem nach einem der vorangehenden Ansprüche, **dadurch gekennzeichnet, dass** die Karte (12) eine Uhr umfasst, deren Wert die Übertragung des Verwürfelungsschlüssels an den Decodierer bestimmt.
